# EUROPÄISCHE PATENTANMELDUNG

(11) **EP 1 543 940 A1**
(43) Veröffentlichungstag der Anmeldung: **22.06.2005**
(21) Anmeldenummer: 04028139.6
(22) Anmeldetag: 26.11.2004
(51) Int. Cl.: B29C 51/04, B29C 51/30

(54) **Thermoformwerkzeug**

(30) Priorität: 16.12.2003 DE 20319530 U
(71) Anmelder: Marbach Werkzeugbau GmbH, 74080 Heilbronn (DE)
(72) Erfinder: Frank, Matthias, 74226 Nordheim (DE)
(74) Vertreter: Hano, Christian, Dipl.-Ing.

(57) **Zusammenfassung**

Das Thermoformwerkzeug zum Herstellen becherförmiger Formteile aus einer erwärmten Kunststofffolie (14) umfasst ein Oberwerkzeug (8) und ein Unterwerkzeug (6), die zur Einklemmung der Kunststofffolie (14) zwischen sich relativ zueinander bewegbar sind. In dem Unterwerkzeug (6) ist wenigstens ein Formraum (13) zur Ausbildung eines Formteils aus der Kunststofffolie (14) ausgebildet. In dem Oberwerkzeug (8) ist wenigstens eine in einen entsprechenden Formraum (13) bewegbare Vorstreckeinrichtung (18) innerhalb eines Niederhalters (16) angeordnet. Um Formteile mit gleichmäßiger Wandungsverteilung und geringer Wandungsstärke herzustellen zu können, weist die Vorstreckeinrichtung (18) wenigstens zwei Vorstreckhebel (24, 26) auf, die jeweils um eine zugeordnete Schwenkachse (25) verschwenkbar sind, die in einer senkrecht zur Bewegungsrichtung der Vorstreckeinrichtung (18) verlaufenden Ebene liegt. Jeder Vorstreckhebel (24, 26) weist einen sich nach unten erstreckenden Streckarm (30) und einen sich nach oben erstreckenden Anschlagarm (28) aufweist. An der Innenfläche des Niederhalters (16) ist ein Führungsvorsprung (34) gegenüber dem jeweiligen Vorstreckhebel (24, 26) ausgebildet, auf dem der Streckarm (30) bei einer Bewegung der Vorstreckeinrichtung (18) in den Formraum (13) so gleitet, dass der Streckarm (30) nach außen verschwenkt wird.

## Beschreibung

Die Erfindung betrifft ein Thermoformwerkzeug nach dem Oberbegriff des Patentanspruchs 1.

Ein solches Thermoformwerkzeug ist u. a. aus der EP 1 103 365 A1 bekannt. Das bekannte Thermoformwerkzeug umfasst ein Oberwerkzeug und ein Unterwerkzeug, die relativ zueinander beweglich sind, um die erwärmte Kunststofffolie zwischen sich einzuklemmen. An dem Oberwerkzeug ist ein Vorstrecker innerhalb eines Niederhalters angeordnet, der am unteren Ende einer in dem Oberwerkzeug koaxial verschiebbar gelagerten und mit einem Antrieb verbundenen Stange befestigt ist. Zur Formung des Formteiles wird der Vorstrecker in den Formraum bewegt, wobei er an der erwärmten Kunststofffolie zur Anlage kommt und diese nach unten in den Formraum hinein drückt. Anschließend wird Formluft durch einen in dem Vorstrecker vorgesehenen Luftkanal eingeführt, weshalb sich die Kunststofffolie an der Innenfläche des Formraums anlegt. Durch die Berührung mit den gekühlten Formraumwänden kühlt die tiefgezogene Kunststofffolie ab und wird formstabil.

Die mit der Kunststofffolie in Berührung kommende Stirnfläche des Vorstreckers ist relativ groß, um eine geeignete Vorverformung der Kunststofffolie vor dem Einbringen der Formluft zu erreichen. Allerdings wird die Kunststofffolie an der Stirnfläche des Vorstreckers abgekühlt, so dass die Kunststofffolie bei der Vorverformung durch den Vorstrecker in dem Bereich der Stirnfläche des Vorstreckers in geringerem Ausmaße gedehnt wird, als in dem Bereich, in dem die Kunststofffolie nicht an dem Vorstrecker anliegt. Hieraus ergibt sich eine ungleichmäßige Wandverteilung und insbesondere eine beträchtliche Wandungsstärke im Bodenbereich des zu formenden Behälters.

Der Erfindung liegt die Aufgabe zugrunde, mit konstruktiv einfachen Mitteln ein Thermoformwerkzeug zu schaffen, das es ermöglicht, Formteile mit gleichmäßiger Wandungsverteilung und geringer Wandungsstärke herzustellen.

Diese Aufgabe wird erfindungsgemäß durch ein Thermoformwerkzeug mit den Merkmalen des Patentanspruchs 1 gelöst. Vorteilhafte Weiterbildungen des erfindungsgemäßen Thermoformwerkzeugs sind Gegenstand der Patentansprüche 2 bis 4.

Bei dem erfindungsgemäßen Thermoformwerkzeug wird die Kunststofffolie durch die Vorstreckhebel gezielt aus dem Bodenbereich nach außen verstreckt und steht für die Seitenwandungsverteilung bereit. Durch eine Bewegung in eine jeweilige Ecke eines Formteiles mit polygonalem Querschnitt kann genügend Material in die Ecke gelangen, so dass auch dieser Bereich des Formteils die notwendige Wandstärke aufweist.

Ein Ausführungsbeispiel der Erfindung werden nachstehend anhand von Zeichnungen näher erläutert. Es zeigen:
Fig. 1 einen Längsschnitt durch eine Formvorrichtung eines Thermoformwerkzeugs, im Bereich zweier Vorstreckhebel, wobei sich eine Vorstreckeinrichtung in einer Ausgangsstellung befindet;
Fig. 2 die Formvorrichtung von Fig. 1, wobei sich die Vorstreckeinrichtung in einer Zwischenstellung befindet;
Fig. 3 die Formvorrichtung von Fig. 1, wobei sich die Vorstreckeinrichtung in einer Endstellung befindet;
Fig. 4 die Formvorrichtung von Fig. 1, wobei sich die Vorstreckeinrichtung in einer Endstellung befindet und Formluft eingeführt ist.

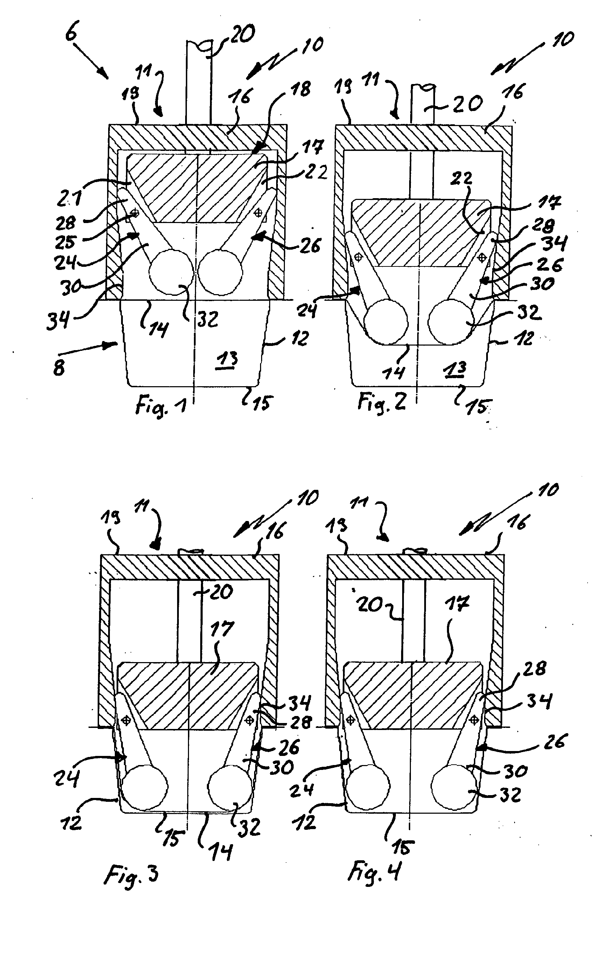

Ein Thermoformwerkzeug 10 weist ein Oberwerkzeug 6 und ein Unterwerkzeug 8 auf, die relativ zueinander bewegbar sind, um eine Kunststofffolie 14 dazwischen zu klemmen. Das Thermoformwerkzeug 10 umfasst mehrere Formvorrichtungen 11, von denen nur eine in den Fig. 1 bis 4 gezeigt ist. Die Formvorrichtungen 11 dienen jeweils zur Ausbildung eines Formteils mit einem rechteckigen Querschnitt.

Die Formvorrichtung 11 umfasst einen in dem Oberwerkzeug 6 angeordneten topfförmigen, nach unten offenen Niederhalter 16, der senkrecht zur Zeichenebene einen im Wesentlichen rechteckigen Querschnitt aufweist. Innerhalb des Niederhalters 16 ist eine Vorstreckeinrichtung 18 koaxial bewegbar angeordnet. Die Vorstreckeinrichtung 18 umfasst einen ebenfalls im Querschnitt im wesentlichen rechteckigen Trägerkörper 17, der an seiner Oberseite mit einer durch den oberen Boden 19 des Niederhalters 16 hindurchgehenden Vorstreckerstange 20 verbunden ist, die durch einen Antrieb (nicht gezeigt) koaxial zu dem Niederhalter 16 bewegbar ist.

Unterhalb des Niederhalters 16 ist in das Unterwerkzeug 8 ein Formeinsatz 12 eingesetzt, in dem ein im Querschnitt im wesentlichen rechteckiger Formraum 13 zur Ausbildung eines Formteils ausgebildet ist, der nach unten durch einen Formboden 15 begrenzt ist, der wie bekannt an einer Auswerferstange (nicht gezeigt) befestigt ist.

Im unteren Bereich jeder der vier Ecken des Trägerkörpers 17 sind im Längsschnitt gesehen dreieckförmige Aussparungen 20, 22 ausgebildet. In diesen Aussparungen 20, 22 ist jeweils ein Vorstreckhebel 24, 26 um eine Schwenkachse 25 verschwenkbar gelagert. Es sind insgesamt vier Vorstreckhebel 24, 26 vorgesehen, von denen in Fig. 1 bis 4 nur zwei gezeigt sind.

Jeder Vorstreckhebel 24, 26 weist ein sich bezüglich der Schwenkachse 25 nach oben erstreckenden Anschlagarm 28 sowie einen sich nach unten über den Trägerkörper 17 hinaus erstreckenden Streckarm 30 auf, an dessen unterem freien Ende ein kugelförmiges Kontaktelement 32 angebracht ist. Die Vorstreckhebel 24, 26 sind jeweils beispielsweise durch eine Torsionsfeder so vorgespannt, dass der Anschlagarm 28 mit seinem äußeren freien Ende an der Innenwand des Niederhalters 16 anliegt.

In der in Fig. 1 gezeigten Ausgangsstellung, in der sich der Trägerkörper 17 angrenzend an den Boden des Niederhalters 16 befindet, sind die Kontaktelemente 32 mit sehr geringem Abstand zueinander symmetrisch angeordnet und befinden sich knapp oberhalb der Kunststofffolie 14. An der Innenseite der Seitenwandung des Niederhalters 16 sind im unteren Bereich Führungsvorsprünge 34 jeweils dem entsprechenden Vorstreckhebel 24, 26 gegenüberliegend angeordnet. Die Höhe der Führungsvorsprünge 34 steigt in Richtung des Unterwerkzeuges 8 zunächst stetig an. Darauf folgt ein Endabschnitt mit konstanter Höhe.

Zur Formung eines Formteiles wird der Trägerkörper 17 über den Antrieb und die Vorstreckerstange 20 nach unten bewegt, so dass die Kontaktelemente 32 mit der Kunststofffolie 14 in Berührung kommen. Dabei gleiten die Anschlagarme 28 entlang der Führungsvorsprünge 34. Aufgrund der Steigung der Führungsvorsprünge 34 werden die Anschlagarme 28 nach innen und somit die Streckarme 30 mit den Kontaktelementen nach außen bewegt. Die Form der Führungsvorsprünge 34 ist dabei so gewählt, dass die Vorstreckhebel 24, 26 dabei gleichmäßig verschwenkt werden und sich die Kontaktelemente 32 in der in Fig. 3 gezeigten untersten Endstellung unmittelbar in der Nähe der entsprechenden Ecke des Formraums 13 befinden.

Aufgrund der sowohl nach unten als auch nach außen gerichteten Bewegung der Kontaktelemente 32 wird die Kunststofffolie 14 in den Seitenbereichen und im Bodenbereich gleichmäßig gedehnt. Die Kontaktfläche der Kontaktelemente 32 ist relativ gering, so dass die Kunststofffolie 14 nicht vorzeitig im Bodenbereich abgekühlt wird. An der konvexen Kontaktfläche liegt die Folie gut an. Es gelangt genügend Material in die Ecken des Formraums 13, so dass auch dieser Bereich des Formteils die notwendige Wandstärke aufweist.

Anschließend wird auf bekannte Weise Formluft in den Formraum 13 eingeführt, so dass sich die Kunststofffolie 14 an der Innenwandung des Formansatzes 12 und am Formboden 15 anlegt. Die Kunststofffolie 14 kühlt sich ab und wird formstabil. Nun werden das Oberwerkzeug 6 und das Unterwerkzeug 8 voneinander weg bewegt und die Vorstreckeinrichtung 18 wieder in die in Fig. 1 gezeigte Ausgangsstellung in den Niederhalter 16 eingezogen. Gleichzeitig wird das hergestellte Formteil durch Herausfahren des an der Auswerferstange befestigten Formbodens 15 ausgeworfen.

## Patentansprüche

1. Thermoformwerkzeug zum Herstellen becherförmiger Formteile aus einer erwärmten Kunststofffolie (14), mit einem Oberwerkzeug (8) und einem Unterwerkzeug (6), die zur Einklemmung der Kunststofffolie (14) zwischen sich relativ zueinander bewegbar sind, wobei in dem Unterwerkzeug (6) wenigstens ein Formraum (13) zur Ausbildung eines Formteils aus der Kunststofffolie (14) ausgebildet ist und in dem Oberwerkzeug (8) wenigstens eine in einen entsprechenden Formraum (13) bewegbare Vorstreckeinrichtung (18) innerhalb eines Niederhalters (16) angeordnet ist, **dadurch gekennzeichnet, dass**
- die Vorstreckeinrichtung (18) wenigstens zwei Vorstreckhebel (24, 26) aufweist, die jeweils um eine zugeordnete Schwenkachse (25) verschwenkbar sind, die in einer senkrecht zur Bewegungsrichtung der Vorstreckeinrichtung (18) verlaufenden Ebene liegt,
- jeder Vorstreckhebel (24, 26) einen sich nach unten erstreckenden Streckarm (30) und einen sich nach oben erstreckenden Anschlagarm (28) aufweist, und
- an der Innenfläche des Niederhalters (16) ein Führungsvorsprung (34) gegenüber dem jeweiligen Vorstreckhebel (24, 26) ausgebildet ist, auf dem der Streckarm (30) bei einer Bewegung der Vorstreckeinrichtung (18) in den Formraum (13) so gleitet, dass der Streckarm (30) nach außen verschwenkt wird.

2. Thermoformwerkzeug nach Anspruch 1, **dadurch gekennzeichnet, dass** an dem freien Ende des Streckarms (28) ein Kontaktelement (32) mit konvexer Kontaktfläche angeordnet ist, die bei der Bewegung der Vorstreckeinrichtung (18) in den Formraum die Kunststofffolie berührt.

3. Thermoformwerkzeug nach Anspruch 1 oder 2, **dadurch gekennzeichnet, dass** der Formraum (13) einen polygonalen Querschnitt aufweist, und jeweils ein Vorstreckhebel (24, 26) einer Ecke des Formraums (13) zugeordnet ist.

4. Thermoformwerkzeug nach Anspruch 4, **dadurch gekennzeichnet, dass** der Formraum (13) einen rechteckigen Querschnitt aufweist.
